# EUROPEAN PATENT SPECIFICATION

(11) **EP 0 766 839 B1**
(45) Date of publication and mention of the grant of the patent: **24.11.1999**
(21) Application number: 95924892.3
(22) Date of filing: 20.06.1995
(51) Int. Cl.: G02B 6/38, B24B 19/22, B24B 41/06

(54) **CONNECTOR ASSEMBLY**
STECKERVORRICHTUNG
ENSEMBLE CONNECTEUR

(30) Priority: 22.06.1994 NL 9401023
(43) Date of publication of application: 09.04.1997
(73) Proprietor: FRAMATOME CONNECTORS INTERNATIONAL, 92084 Paris La Défense (FR)
(72) Inventor: MORLION, Danny, B-9040 St. Amandsberg (BE); JONCKHEERE, Luc, B-1700 Dilbeek (BE); VAN KOETSEM, Jan, Peter, Karel, B-2070 Zwijndrecht (BE)
(74) Representative: de Vries, Johannes Hendrik Fokke
(86) International application number: EP9502403
(87) International publication number: WO9535519

(56) References cited:
- EP-A- 0 571 037
- US-A- 4 155 624
- US-A- 4 186 997
- US-A- 5 155 787

## Description

The invention relates to a connector assembly according to the preamble of claim 1.

A connector assembly of this type is disclosed in EP-A-0 571 037 and in CA-A-2 111 151, family member of EP-A-0 602 720, published at the priority date of the present application. This known connector assembly has the advantage that for manufacturing it is relatively simple to provide a reference face at a very accurately predetermined location with respect to the alignment channels so that by simply pressing the reference faces against each other an accurate alignment of the contact pads with respect to each other is obtained. Manufacturing the alignment pieces of the connector assembly remains however complicated and is relatively costly.

The invention aims to provide a connector assembly of the above-mentioned type wherein manufacturing of the alignment piece in particular is possible with increased accuracy at lower cost.

To this end the connector assembly according to the invention is characterized by the characterizing features of claim 1.

In this manner a connector assembly is obtained wherein the support plate can be manufactured by a conventional manufacturing technique at relatively low cost, whereas the manufacturing of the guiding plate can be optimized as to obtaining a very high accuracy. As at least the ends of the alignment channels and the reference slot or the reference projection, respectively, are part of the guiding plate, the components of the alignment plate determining the accuracy of the location of the contact pads of the conductors are manufactured with very high accuracy. The guiding plate can for example be made of metal by means of a LIGA-technique known per se. The term LIGA is an abbreviation of the German terms "Lithographic, Galvano-formung, Abformung". However, it is also possible to use other manufacturing techniques resulting in a very high accuracy, such as an etching technique, and the guiding plate can also be manufactured of other materials, such as ceramics or plastic material.

The invention further provides an alignment piece to be used in a connector assembly, comprising one or more alignment channels for optical and/or electrical conductors and a reference slot or a reference projection, respectively, with at least one straight reference face located at an accurately determined location with respect to the alignment channels, wherein the alignment piece according to the invention is characterized by the features of claim 7.

Finally the invention provides a method for manufacturing a connector part as set forth by the features of claim 8.

The invention will be further explained by reference to the drawings in which an embodiment of the connector assembly according to the invention is schematically shown.

Fig. 1 is a perspective view of a first connector part of a connector assembly according to the invention.

Fig. 2 is a perspective view of a second connector part which together with the first connector part of fig. 1 forms an embodiment of the connector assembly according to the invention.

Fig. 3 is a perspective view of the second connector part of fig. 2, wherein for explanation purposes a foil layer is not shown, which foil layer covers the fibre facets of the conductors in normal use.

Fig. 4 is a perspective view at a much larger scale of the alignment piece of the first connector part of fig. 1 before mounting the conductors.

Fig. 5 is a perspective view at a much larger scale of the alignment piece of the second connector part of fig. 2, wherein the conductors are not yet mounted.

Fig. 6 is a perspective view of the alignment piece of fig. 5, wherein one polishing projection is shown in a position not yet mounted.

Fig. 7-15 show some steps of an embodiment of the method according to the invention.

Fig. 16 shows a perspective view of an alternative embodiment of the alignment piece of the first connector part.

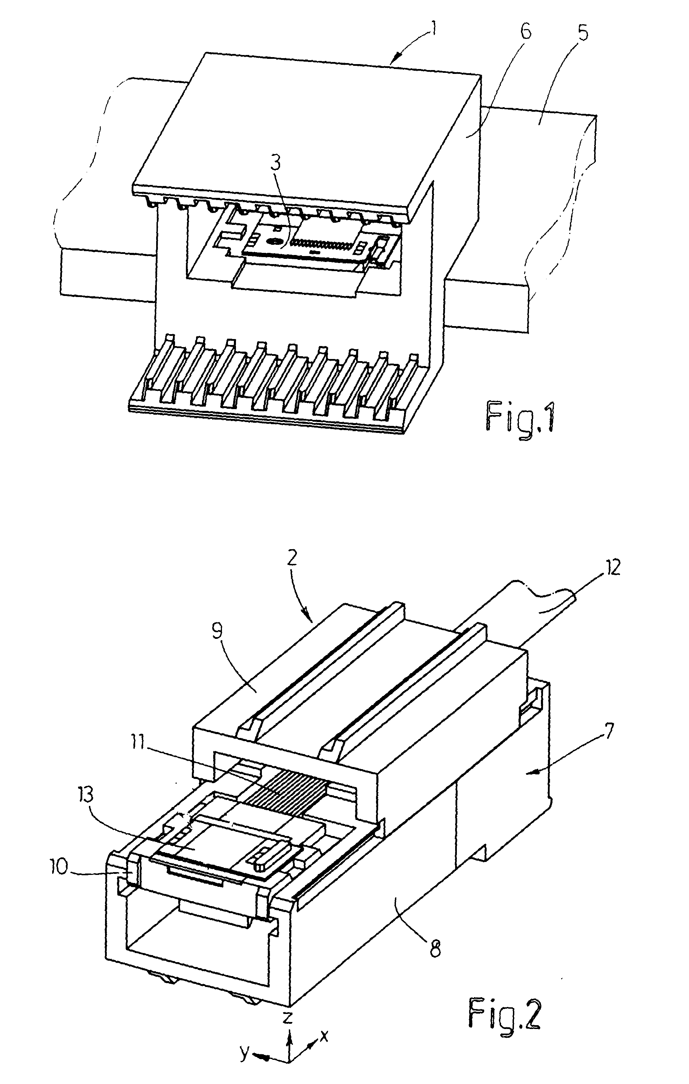

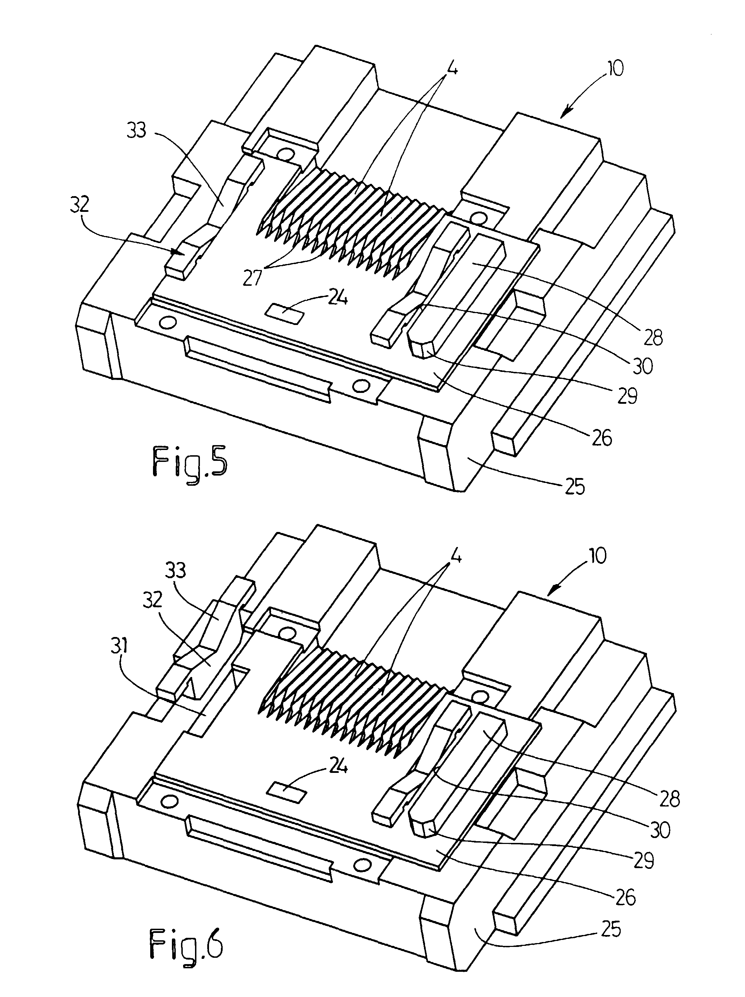

Referring to figs. 1 and 2 there are shown a first connector part 1 and a second connector part 2 of an embodiment of a connector assembly for interconnecting optical and/or electrical conductors. The first connector part 1 is provided with a first alignment piece 3 shown in detail in fig. 4, before mounting the conductors. The alignment piece 3 comprises adjacent alignment channels 4 for first conductors which are not shown in figs. 1 and 4 for the sake of clearness. These first conductors which can be made as optical or electrical conductors, are embedded in a printed circuit board in which the alignment piece is also embedded. Each conductor is located in a corresponding alignment channel 4, so that the position of the conductors is determined by the alignment channels 4. As shown in fig. 4, these alignment channels 4 extend obliquely upwardly to the upper surface of the alignment piece 3 so that the ends of the conductors are gradually guided towards this upper surface. In the embodiment shown the upper surface of the alignment piece 3 coincides with the upper surface of the printed circuit board, it is however also possible that the alignment piece projects or is countersunk with respect to the upper surface of the printed circuit board 5. The parts of the conductors projecting out of the alignment piece 3 are removed by polishing in such a manner that fibre facets of the conductors are obtained in the upper surface of the alignment piece as will be described hereinafter.

The connector part 1 further comprises a housing 6 which is mounted on the printed circuit board 5 as shown in fig. 1 and encloses the alignment piece 3 with the fibre facets of the conductors.

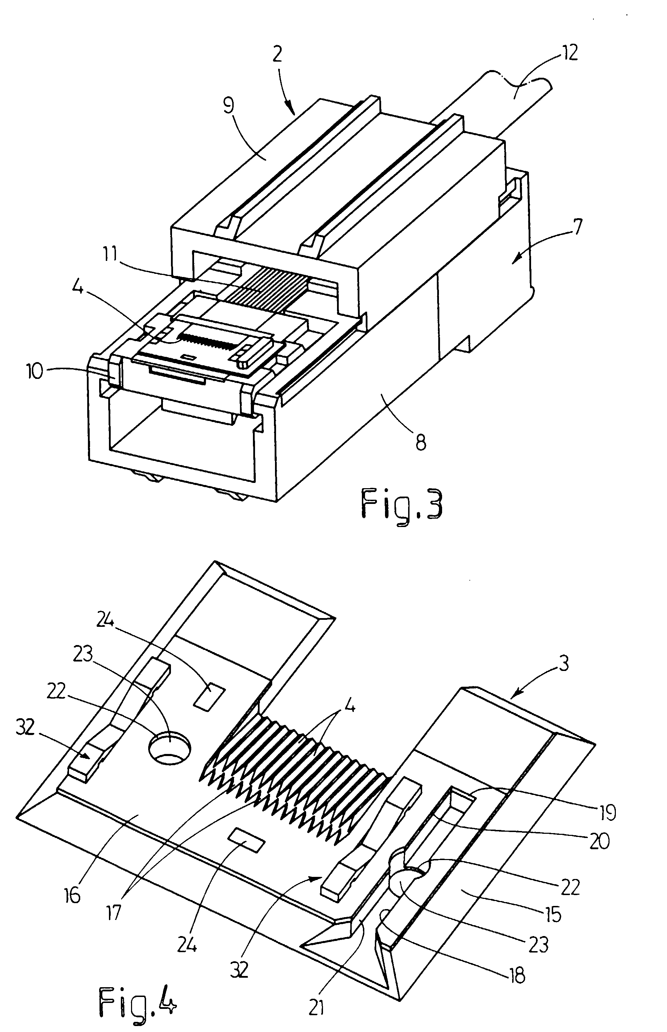

The second connector part 2 shown in fig. 2 is provided with a housing 7 comprising a support part 8 and a cap 9 slidable on the support part 8. An alignment piece 10 is mounted in the support part 8 in a movable manner in three mutual perpendicular directions x, y and z. These x-, y- and z-directions are schematically indicated by arrows in fig. 2. The alignment piece 10 is shown in detail in figs. 5 and 6 in a situation before mounting the conductors and comprises in the same manner as the alignment piece 3 adjacent alignment channels 4 for optical and/or electrical conductors 11 of a cable 12. The conductors 11 are gradually guided upwardly in the alignment channels 4 towards the upper surface of the alignment piece 10. In fig. 2 the fibre facets of the conductors 11 are not visible in that a part of the upper surface of the alignment piece 10 and the contact pads of the conductors 11 are covered by a foil layer 13 attached to the alignment piece 10. Fig. 3 shows the connector part 2 wherein the foil layer 13 is removed so that the ends of the alignment channels 4 in the alignment piece 10 are visible.

Fig. 4 shows a perspective view of the alignment piece 3 at an enlarged scale, wherein the conductors are not shown for the sake of clearness. The alignment piece 3 comprises a support plate 15 and a thin guiding plate 16 attached to the same. The use of two different manufacturing techniques for the support plate 15 and the guiding plate 16, respectively, shows the advantage that manufacturing of the support plate 15 can be optimized as to low cost whereas the manufacturing of the guiding plate 16 can be optimized as to accuracy at acceptable cost. In this manner the alignment piece 3 as a whole can have optimum characteristics with respect to accuracy at relatively low cost. As shown in fig. 4, the alignment channels 4 are formed both in the support plate 15 and in the guiding plate 16, wherein the ends of the alignment channels 4 are made as V-shaped slots 17 in the guiding plate 16. The alignment channels 4 of the support plate 15 provide a prepositioning and the V-shaped slots 17 provide a fine positioning of the conductors 11. Further a reference slot 18 with two straight reference faces 19 and 20, respectively, is made in the guiding plate 16. These reference faces 19, 20 are lying at locations very accurately determined with respect to the V-shaped slots 17 in the guiding plate 16. As the guiding plate 16 with the V-shaped slots 17 and the reference faces 19, 20 is made with very high accuracy, the location of the reference faces 19, 20 with respect to the V-shaped slots 17 is determined with very high accuracy and thereby also with respect to the fibre facets of the conductors, in that the location of the fibre facets is determined by the V-shaped slots.

The support plate 15 is provided with a slot 21 corresponding with the reference slot 18, wherein the dimensions of the slot 21 are in any case at least equal to and preferably greater than the dimensions of the reference slot 18 so that the reference faces 19, 20 do form with certainty the stop faces for a reference projection to be inserted into the slot 18 as will be described hereinafter.

The guiding plate 16 is further provided with two positioning holes 22 for positioning the alignment piece 3 on positioning pins not shown of a wiring table known per se for mounting optical fibres for example in the alignment channels 4. The support plate 15 has corresponding holes 23 the diameter of which is at least equal to and preferable greater than the same of the positioning holes 22. Thereby it is obtained that the accuracy of the positioning of the alignment piece 3 is determined by the accuracy of the positioning holes 22 in the guiding plate 16.

The guiding plate 16 has two rectangular openings in which two rectangular projections 24 of the support plate 15 are received. In this manner the guiding plate 16 is positioned with respect to the support plate 15 and attached on the support plate 15. Both rectangular openings and projections, respectively, can also be united into a single L-shaped opening or projection, respectively.

In figs. 5 and 6 the alignment piece 10 of the connector part 2 is shown in a perspective view at larger scale. The alignment piece 10 is assembled of a support plate 25 and a thin guiding plate 26 attached to the same just as the alignment piece 3. The support plate 25 is made of a plastic material, for example by injection moulding. The guiding plate 26 is manufactured with very high accuracy just as the guiding plate 16. In this case the alignment channels 4 are formed both in the support plate 25 and in the guiding plate 26, wherein the ends of the alignment channels 4 are made as V-shaped slots 27 in the guiding plate 26. The guiding plate 26 has an opening in which a corresponding projection 24 of the support plate 25 is received. Thereby the guiding plate 26 is positioned with respect to the support plate 25 and attached to the support plate.

Further the guiding plate 26 is provided with a reference projection 28 which as separate part is also manufactured with very high accuracy and attached in an opening in the guiding plate 26. The reference projection 28 can be manufactured for example by means of the LIGA-technique. It is however also possible to use an other manufacturing technique resulting in a very high accuracy. It is also possible to make the reference projection 28 as a unit with the guiding plate 26. The reference projection 28 is provided with two reference faces 29 and 30, respectively, which are lying at locations very accurately determined with respect to the V-shaped slots 27. In this manner it is obtained that the reference faces 29, 30 are located at locations very accurately determined with respect to the fibre facets of the conductors 11, the location of which is determined by the V-shaped slots 27.

Now when the connector part 2 is inserted into the connector part 1, the reference projection 28 is inserted into the reference slot 18, wherein the reference faces 29, 30 are pressed against the reference faces 19, 20 when the connector parts 1, 2 are in the fully coupled position. The cooperation between the reference slot 18 and the reference projection 28 and the corresponding reference faces 19, 20 and 29, 30 is further described in published European patent application EP-A-0 571 037 and European patent application EP-A-0 602 726, to which publications reference is made for a further explanation.

The connector assembly 1, 2 described shows the advantage that the alignment pieces 3, 10 which are assembled of the support plate 15 and 25, respectively, and the guiding plate 16 and 26, respectively, allow for a very accurate coupling of the fibre facets of the conductors of the connector part 1 with the fibre facets of the conductors 11 of the connector part 2, wherein the alignment pieces 3, 10 as a whole are manufactured at relatively low cost and the guiding plates 16, 26 with very high accuracy.

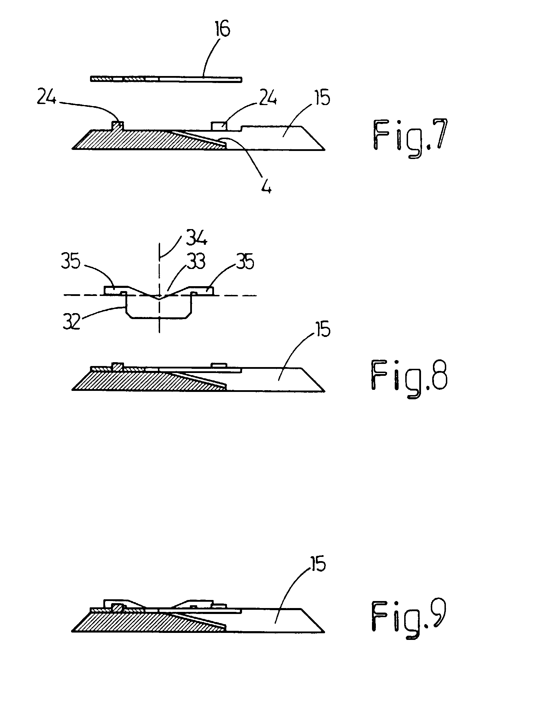

The method for manufacturing the connector part 1 described, is further explained by reference to the schematical cross-sections of figs. 7-15.

Fig. 7 shows the support plate of the alignment piece 3 separated from the guiding plate 16. The guiding plate 16 is attached on the support plate 15, wherein the projections 24 in cooperation with the corresponding openings in the guiding plate 16 provide for a correct mutual positioning.

Two openings 31 are formed in the guiding plate 16 just as in the guiding plate 26, said openings 31 each being intended for receiving a polishing projection 32 which is shown in fig. 8 detached from the alignment piece 3. These polishing projections 32 are also shown in figs. 4-6. In fig. 6 one of the openings 31 in the guiding plate 26 is visible. The polishing projections 32 are intended for determining the polishing depth as will be explained hereinafter. To this end each polishing projection 32 has a cross-sectional surface varying in height direction. The polishing projection 32 shown is provided with a V-shaped slot 33, the apex angle of which lies in the centre plane 34 of the polishing projection which is schematically indicated. In fig. 9 the polishing projections 32 are mounted in the openings 31, wherein the lower side of projecting arms 35 of the polishing projection join the upper surface of the guiding plate 16.

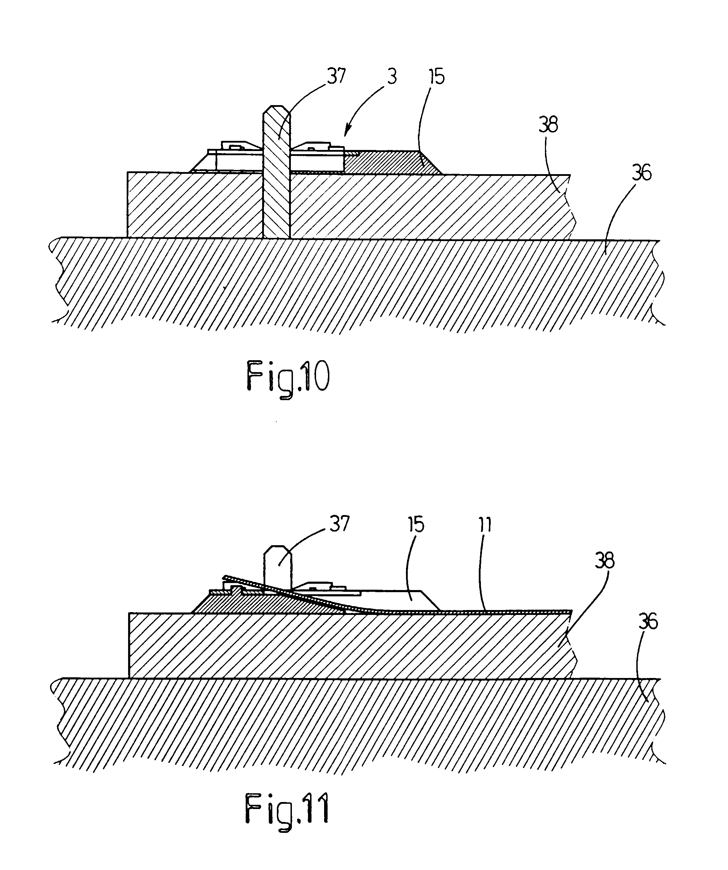

In fig. 10 a part of a wiring table 36 is visible in a section through the reference slot 18 of the alignment piece 3, which wiring table 36 comprises two positioning pins 37, one of which is shown in fig. 11. A first part 38 of the printed circuit board 5 is placed on the wiring table 36, which part 38 is provided with positioning openings cooperating with the positioning pins 37. The alignment piece 3 is placed on the part 38 of the printed circuit board 5, wherein the positioning holes 22 of the guiding plate 16 cooperate with the positioning pins 37. When the part 38 and the alignment piece 3 are in this manner placed on the wiring table 36, the optical conductors 11 are pushed into the alignment channels 4 until the conductors 11 project above the upper surface of the guiding plate 16 as shown in fig. 11 by way of example. The position of the optical conductors 11 is determined by the alignment channels 4 and the V-shaped slots 17 in the guiding plate 16.

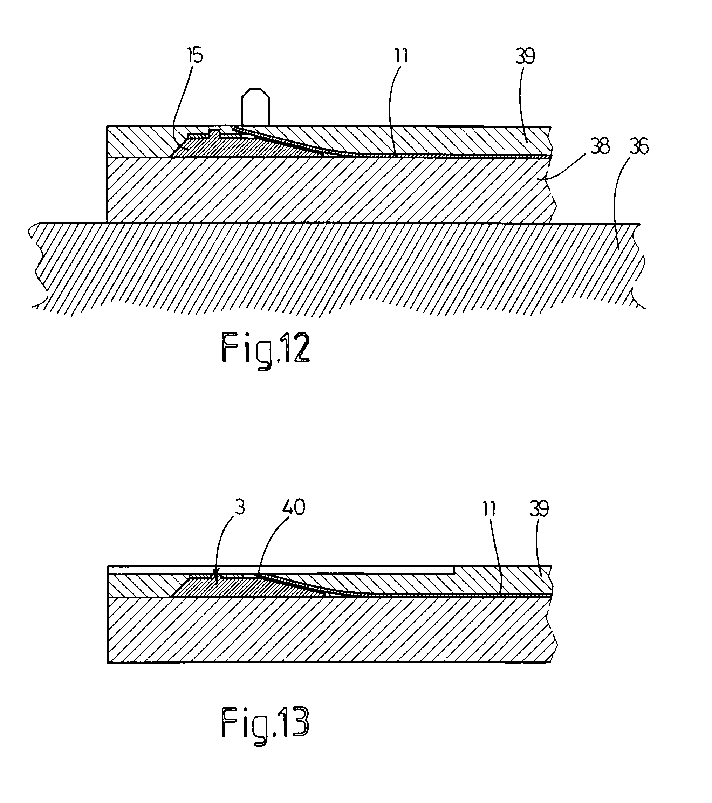

In the next step the optical conductors 11 and the alignment piece 3 are embedded in the printed circuit board 5 by providing a second layer 39 on the first part 38 as indicated in fig. 12. After applying the layer 39 a portion of the layer 39 which for example consists of epoxy resin, is removed by polishing, wherein also the parts of the conductors 11 projecting above the surface of the guiding plate 16 are removed. Polishing is continued until the epoxy resin above the upper surface of the guiding plate 16 and the projecting parts of the conductors 11 are completely removed. Thereby fibre facets 40 of the conductors 11 in the upper surface of the guiding plate 16 are obtained as shown in fig. 13.

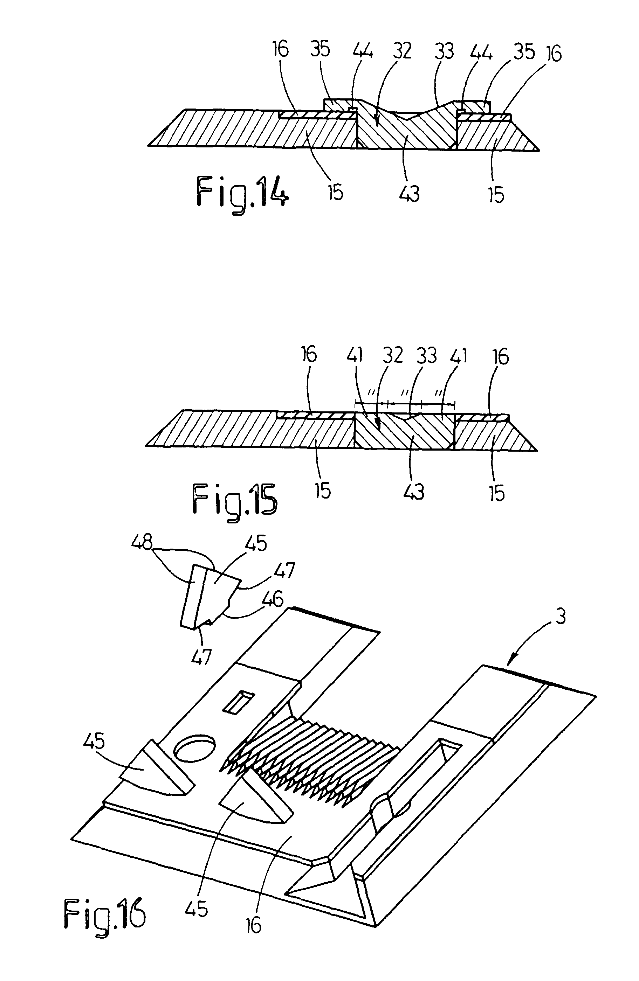

During polishing the surface area of the V-shaped slot 33 and the surface areas of the polishing projection parts at both sides of the slots 33 are measured continuously. In figs. 14 and 15 a section of the alignment piece 3 through a polishing projection 32 is shown before and after polishing, respectively. As appears by comparison of fig. 14 and fig. 15, the V-shaped slot 33 is formed in such a manner in the polishing projection 32 and the apex angle of the V-shaped slot 33 is chosen in such a manner that in the section with the lower side of the arms 35 schematically indicated in fig. 8 by a dashed line 42, the surface area of the V-shaped slot 33 and the surface areas of the polishing projection parts at both sides of the slot 33 are mutually equal. Thereby it can be determined very accurately when the desired polishing depth of fig. 15 is reached. In fig. 15 the mutual equal length of the surface areas of the slot 33 and the polishing projection parts 41, respectively, is indicated by arrows. Polishing is stopped as soon as the surface areas at each polishing projection 32 are mutually equal.

Each arm 35 of the polishing projection 32 is provided at its lower side with a slot 44 joining a base part 43. When during polishing the correct polishing depth according to fig. 15 is almost reached, first the arms 35 of the polishing projection 32 will break off. This causes a step-wise change of the surface areas of the polishing projection parts 40 which indicates that the correct polishing depth is substantially reached.

Fig. 16 shows the alignment piece 3 which in this case is provided with three polishing projections 45. The polishing projections 45 have a cross-sectional surface area varying in height direction in that at both sides of a base part 46 a first straight face 47 joins this base part 46, which faces 47 join the upper surface of the guiding plate 16 in the mounted position of the polishing projection 45 and enclose a small angle with this upper surface. The straight face 47 is joined by a second straight face 48 which extends in opposite direction and encloses a substantially greater angle with the upper surface of the guiding plate 16. During polishing the surface of the polishing projection will first increase and after reaching the intersecting line of the faces 47, 48 will decrease. This change provides a signal that the correct polishing depth is substantially reached. At reaching the desired polishing depth the surface area of each polishing projection 45 equals the surface area of the base part 46.

It is noted that applying optical conductors 11 in the alignment channels 4 of the alignment piece 10 is carried out substantially in the above-described manner. In the same manner as the alignment piece 3 the alignment piece 10 is to this end provided with not shown positioning holes cooperating with the positioning pins 37 of the wiring table 36. When the optical conductors 11 have been pushed into the alignment channels 4, the optical conductors are connected with the alignment piece 10 by embedding with an epoxy resin and superfluous epoxy resin is removed by polishing in the above-described manner, wherein the polishing projections 32 are used for measuring the polishing depth.

Although in the above-described embodiments two polishing projections 32 or three polishing projections 45, respectively, are used, it is also possible to monitor the polishing depth by applying a single polishing projection. However preferably at least two polishing projections are used as by means of two polishing projections a polishing parallel to the surface of the guiding plate 16, 26 can be better guaranteed.

The invention is not restricted to the above-described embodiments which can be varied in a number of ways within the scope of the invention as set forth in the attached claims.

## Claims

1. Connector assembly for interconnecting optical and/or electrical conductors (11), comprising first and second connector parts (12), the first and second connector parts being provided with a first and second alignment piece (3, 10), respectively, each alignment piece having one or more alignment channels (4) for first and second conductors (11) respectively, said alignment channels extending obliquely upwardly to the upper surface of the alignment piece, wherein each conductor includes a fibre facet (40) in the upper surface of the corresponding aligment piece and wherein the first alignment piece (3) is provided with a reference slot (18) with at least one straight first reference face (19, 20) and the second alignment piece (10) is provided with a reference projection (28) with at least one straight second reference face (29, 30) which abuts the first reference face in the coupled position of the connector parts, said reference faces being located at an accurately determined location with respect to the alignment channels, **characterized in that** one or both alignment pieces (3, 10) comprise(s) a support plate (15, 25) and a guiding plate (16, 26), said alignment channels being made in both the support plate and the guiding plate, wherein at least the ends (17, 27) of the alignment channels (4) are formed in the guiding plate and the reference slot (18) and the reference projection (28), respectively, are part of the guiding plate, the guiding plate with the ends of the alignment channels and the reference slot and the reference projection, respectively, being manufactured with a higher accuracy than the support plate, wherein the guiding plate is mounted on the upper surface of the alignment piece to determine with the accuracy of the guiding plate the location of the fibre facets of the corresponding conductors with respect to the reference slot or reference projection, respectively.

2. Connector assembly according to claim 1, **characterized in that** each alignment channel (4) debouches in a V-shaped slot (17, 27) in the upper surface of the guiding plate (16, 26).

3. Connector assembly according to claim 1 or 2, **characterized in that** the reference projection (28) is manufactured with very high accuracy and is attached in an opening of the guiding plate. (26).

4. Connector assembly according to claim 1, 2 or 3, **characterized in that** the guiding plate (16, 26) is provided with at least one polishing projection (32, 45) for determining the polishing depth.

5. Connector assembly according to claim 4, **characterized in that** each polishing projection (32, 45) is manufactured with very high accuracy and is attached in an opening (31) of the guiding plate (16, 26).

6. Connector assembly according to anyone of the preceding claims, **characterized in that** the guiding plate (16) is provided with at least two positioning holes (22) for positioning the corresponding alignment piece (3) on positioning pins (37) of a wiring table (36), wherein the support plate (15) is provided with corresponding positioning holes (23) which are larger than the positioning holes of the guiding plate.

7. Alignment piece (3, 18), comprising one or more alignment channels (4) for optical and/or electrical conductors (11) and a reference slot (18) or a reference projection (28), respectively, with at least one straight reference face (19, 20; 29, 30) located at an accurately determined location with respect to the alignment channels, **characterized in that** the alignment piece (3, 10) comprises a support plate (15, 25) and a guiding plate (16, 26), said alignment channels being made in both the support plate and the guiding plate, wherein at least the ends (17, 27) of the alignment channels (4) are formed in the guiding plate and the reference slot (18) and the reference projection (28), respectively, are part of the guiding plate, the guiding plate with the ends of the alignment channels and the reference slot or the reference projection, respectively, being manufactured with a higher accuracy than the support plate, wherein the guiding plate is mounted on the upper surface of the alignment piece to determine with the accuracy of the guiding plate the location of the fibre facets of the conductors to be mounted in the channels with respect to the reference slot or reference projection, respectively.

8. Method for manufacturing a connector part (1, 2), wherein an alignment piece (3, 10) is manufactured with one or more alignment channels (4) for optical and/or electrical conductors (11) and the conductors are placed in the alignment channels in such a manner that the ends of the conductors at least partially project above the upper surface of the alignment piece, whereafter the condu-ctors are cast in the alignment piece and fiber facets (40) of the conductors are formed in one plane with the upper surface of the alignment piece by removing the projecting ends of the conductors by polishing, **characterized in that** the alignment pieces (3, 10) is made by mounting a guiding plate (16, 26) on a support plate (15, 25), wherein the alignment channels are made in both the support plate and the guiding plate, wherein at least the ends (17, 27) of the alignment channels (4) are formed in the guiding plate and the reference slot (18) and the reference projection (28), respectively, are made as a part of the guiding plate, the guiding plate with the ends of the alignment channels and the reference slot and the reference projection, respectively, being manufactured with a higher accuracy than the support plate, wherein the conductors are inserted into the alignment channels with their ends received in the guiding plate to determine with the accuracy of the guiding plate the location of the fibre facets of the corresponding conductors with respect to the reference slot or reference projection, respectively.

9. Method according to claim 8, **characterized in that** the guiding plate (16, 26) is provided with at least one polishing projection (32, 45) with a cross-sectional surface varying in height direction, wherein the polishing step is continued until the surface of each polishing projection has a predetermined value.

10. Method according to claim 9, **characterized in that** each polishing projection (32) is made with a V-shaped slot (33), the apex angle of which lies in the centre of the polishing projection, wherein the apex angle of the V-shaped slot is chosen in such a manner that in the cross-section with the upper surface of the guiding plate, the surface of the V-shaped slot and the surfaces of the polishing projection parts at both sides of the V-shaped slot are mutually equal, wherein the polishing step is continued until said cross-section is reached.

11. Method according to claim 10, **characterized in that** during said polishing step the surface of the V-shaped slot (33) and the surfaces of the polishing projection parts at both sides of the V-shaped slot are continuously measured and the polishing step is stopped as soon as these surfaces are mutually equal at each polishing projection.

12. Method according to claim 9, 10 or 11, **characterized in that** the polishing projections (32, 45) are made with very high accuracy and are attached in an opening (31) in the guiding plate (16, 26).

13. Method according to anyone of claims 8-12, **characterized in that** a reference slot (19) with at least one straight reference face (19, 20) is formed in the guiding plate (16) at an accurately determined location with respect to the alignment channels (4), wherein a corresponding slot (21) is formed in the support part (15), said corresponding slot being larger than the reference slot in the guiding plate.

14. Method according to anyone of claims 8-12, **characterized in that** the guiding plate (26) is made with a reference projection (28) with at least one straight reference face (29, 30) located at an accurately determined location with respect to the alignment channels (4).

15. Method according to claim 14, **characterized in that** the reference projection (28) is made with very high accuracy and is attached in an opening in the corresponding guiding plate (26).

16. Method according to anyone of claims 8-15, **characterized in that** the guiding plate (16) is provided with at least two positioning holes (22), by means of which the alignment piece (3) is positioned on positioning pins (37) of a wiring table (36), wherein the support plate (15) is made with corresponding holes (23) which are larger than the positioning holes of the guiding plate.

## Patentansprüche

1. Steckervorrichtung zum Verbinden optischer und/oder elektrischer Leiter (11) mit ersten und zweiten Steckerteilen (12), wobei die ersten und zweiten Steckerteile mit einem ersten und einem zweiten Anschlußteil ausgestattet sind und jedes Anschlußteil einen oder mehrere Anschlußkanäle (4) für erste und zweite Leiter (11) aufweist, wobei die Anschlußkanäle sich schräg nach oben gerichtet zur oberen Oberfläche des Anschlußteils erstrecken, wobei jeder Leiter eine Faserfacette (40) in der oberen Fläche des entsprechenden Anschlußteils aufweist und wobei das erste Anschlußteil (3) mit einem Bezugsschlitz (18) mit wenigstens einer geraden ersten Bezugsfläche (19, 20) ausgestattet ist und das zweite Anschlußteil (10) mit einem Bezugsvorsprung (28) mit wenigstens einer geraden zweiten Bezugsfläche (29, 30) ausgestattet ist, die in der eingekuppelten Position der Steckerteile die erste Bezugsfläche kontaktiert, wobei die Bezugsflächen an einer in bezug auf die Anschlußkanäle genau bestimmten Stelle angeordnet sind,
dadurch gekennzeichnet, daß
ein oder beide Anschlußteile (3, 10) eine Stützplatte (15, 25) und eine Führungsplatte(16, 26) aufweisen, die Anschlußkanäle sowohl in der Stützplatte als auch in der Führungsplatte eingearbeitet sind, wobei wenigstens die Enden (17, 27) der Anschlußkanäle (4) in der Führungsplatte angeordnet sind und der Bezugsschlitz (18) und der Bezugsvorsprung (28) jeweils Teil der Führungsplatte sind, wobei die Führungsplatte mit den Enden der Bezugskanäle und der Bezugsschlitz und der Bezugsvorsprung jeweils mit einer höheren Genauigkeit als die Stützplatte hergestellt sind, wobei die Führungsplatte auf der oberen Fläche des Anschlußteils montiert ist, um mit der Genauigkeit der Führungsplatte die Position der Faserflächen der entsprechenden Leiter in bezug auf den Bezugsschlitz oder den Bezugsvorsprung zu bestimmen.

2. Steckervorrichtung nach Anspruch 1, dadurch gekennzeichnet, daß jeder Anschlußkanal (4) in einen V-förmigen Schlitz (17, 27) in der oberen Fläche der Führungsplatte (16, 26) einmündet.

3. Steckervorrichtung nach Anspruch 1 oder 2, dadurch gekennzeichnet, daß der Bezugsvorsprung (28) mit einer hohen Genauigkeit hergestellt und in einer Öffnung der Führungsplatte (26) angebracht ist.

4. Steckervorrichtung nach Anspruch 1, 2 oder 3, dadurch gekennzeichnet, daß die Führungsplatte (16, 26) mit wenigstens einem Polier- bzw. Schleifvorsprung (32, 45) zur Bestimmung der Polier- bzw. Schleiftiefe ausgestattet ist.

5. Steckervorrichtung nach Anspruch 4, dadurch gekennzeichnet, daß jeder der Polier- bzw. Schleifvorsprünge (32, 45) mit hoher Genauigkeit hergestellt und in einer Öffnung (31) der Führungsplatte (16, 26) befestigt ist.

6. Steckervorrichtung nach einem der vorstehenden Ansprüche, dadurch gekennzeichnet, daß die Führungsplatte (16) mit wenigstens zwei Positionierlöchern (22) zur Positionierung der entsprechenden Anschlußteile (3) auf Positionsierungsstiften (37) eines Verdrahtungstisches (36) ausgestattet ist, wobei die Stützplatte (15) entsprechende Positionierlöcher (23) aufweist, die größer sind als die Positionsierlöcher der Führungsplatte.

7. Anschlußteile (3, 18) mit einem oder mehreren Anschlußkanälen (4) für optische und/oder elektrische Leiter (11) und jeweils einem Bezugsschlitz (18) oder einem Bezugsvorsprung (28) mit wenigstens einer an einer genau bestimmten Stelle in bezug auf die Anschlußkanäle angeordneten geraden Bezugsfläche (19, 20; 29, 30), dadurch gekennzeichnet, daß die Anschlußteile (3, 10) eine Stützplatte (15, 25) und eine Führungsplatte (16, 26) aufweisen, die Anschlußkanäle sowohl in der Stützplatte als auch in der Führungsplatte eingearbeitet sind, wobei wenigstens die Enden (17, 27) der Anschlußkanäle (4) in der Führungsplatte geformt sind, und der Bezugsschlitz (18) und der Bezugsvorsprung (28) jeweils Teile der Führungsplatte sind, die Führungsplatte mit den Enden der Anschlußkanäle und der Bezugsschlitz oder der Bezugsvorsprung jeweils mit höherer Genauigkeit hergestellt sind als die Stützplatte, wobei die Führungsplatte auf der oberen Fläche des Anschlußteils befestigt ist, um mit der Genauigkeit der Führungsplatte die Position der in den Kanälen zu montierenden Faserfacetten des Leiters in bezug auf den Bezugsschlitz oder den Referenzvorsprung zu bestimmen.

8. Verfahren zur Herstellung eines Steckerteils (1, 2), bei welchem ein Anschlußteil (3, 10) mit einem oder mehreren Anschlußkanälen (4) für optische und/oder elektrischer Leiter (11) hergestellt wird und die Leiter derart in den Anschlußkanälen angeordnet werden, daß ihre Enden wenigstens teilweise über die obere Fläche des Anschlußteils vorstehen, wonach die Leiter in dem Anschlußteil eingegossen werden und Faserfacetten (40) des Leiters in einer Ebene mit der oberen Fläche des Anschlußteils durch Entfernen der vorstehenden Enden des Leiters durch Polieren bzw. Schleifen gebildet werden, dadurch gekennzeichnet, daß die Anschlußteile (3, 10) durch Montage einer Führungsplatte (16, 26) auf einer Stützplatte (15, 25) hergestellt werden, wobei die Anschlußkanäle sowohl in die Führungsplatte als auch in die Stützplatte eingebracht werden, wobei wenigstens die Enden (17, 27) der Anschlußkanäle (4) in der Führungsplatte geformt werden und der Bezugsschlitz (18) und der Bezugsvorsprung (28) als Teil der Führungsplatte gefertigt werden, die Führungsplatte mit den Enden der Anschlußkanäle und der Bezugsschlitz und der Bezugsvorsprung jeweils mit höherer Genauigkeit als die Führungsplatte hergestellt werden, wobei die Leiter in Anschlußkanäle eingesetzt werden mit ihren in der Führungsplatte aufgenommenen Enden, um mit der Genauigkeit der Führungsplatte die Position der Faserflächen der entsprechenden Leiter in bezug auf den Bezugsschlitz oder den Bezugsvorsprung zu bestimmen.

9. Verfahren nach Anspruch 8, dadurch gekennzeichnet, daß die Führungsplatte (16, 26) mit wenigstens einem Schleifvorsprung (32, 45) mit einer in Höhenrichtung variierenden Querschnittsoberfläche ausgestattet ist, wobei der Schleifschritt fortgesetzt wird bis die Oberfläche aller Schleifvorsprünge einen vorbestimmten Wert erreicht hat.

10. Verfahren nach Anspruch 9, dadurch gekennzeichnet, daß alle Schleifvorsprünge (32) mit einem V-förmigen Schlitz (33) hergestellt werden, dessen Scheitelpunktswinkel im Zentrum des Schleifvorsprungs liegt, wobei der Scheitelpunktswinkel des V-förmigen Schlitzes derart ausgewählt wird, daß im Querschnitt mit der oberen Fläche der Führungsplatte die Oberfläche des V-förmigen Schlitzes und die Oberfläche der schleifenden Vorsprungteile auf beiden Seiten des V-förmigen Schlitzes beidseitig gleich sind, wobei der Schleifschritt fortgesetzt wird, bis dieser Querschnitt erreicht ist.

11. Verfahren nach Anspruch 10, dadurch gekennzeichnet, daß während des Schleifschritts die Oberfläche des V-förmigen Schlitzes (33) und die Oberflächen der schleifenden Vorsprungteile an beiden Seiten des V-förmigen Schlitzes kontinuierlich gemessen werden und der Schleifschritt gestoppt wird, sobald diese Oberflächen an jedem Schleifvorsprung beidseitig gleich sind.

12. Verfahren nach Anspruch 9, 10 oder 11, dadurch gekennzeichnet, daß die Schleifvorsprünge (32, 45) mit einer hohen Genauigkeit hergestellt und in einer Öffnung (31) in der Führungsplatte (16, 26) angebracht sind.

13. Verfahren nach einem der Ansprüche 8 bis 12, dadurch gekennzeichnet, daß ein Bezugsschlitz (19) mit wenigstens einer geraden Bezugsfläche (19, 20) in der Führungsplatte (16) an einer genau bestimmten Stelle in bezug auf die Anschlußkanäle (4) geformt ist, wobei ein entsprechender Schlitz (21) im Stützteil (15) geformt ist, der größer als der Bezugsschlitz in der Führungsplatte ist.

14. Verfahren nach einem der Ansprüche 8 bis 12, dadurch gekennzeichnet, daß die Führungsplatte (26) mit einem Bezugsvorsprung (28) mit wenigstens einer geraden Referenzfläche (29, 30) hergestellt wird, die an einer genau bestimmten Stelle in bezug auf die Anschlußkanäle (4) angeordnet ist.

15. Verfahren nach Anspruch 14, dadurch gekennzeichnet, daß der Bezugsvorsprung (28) mit hoher Genauigkeit hergestellt und in einer Öffnung der entsprechenden Führungsplatte (26) angebracht ist.

16. Verfahren nach einem der Ansprüche 8 bis 15, dadurch gekennzeichnet, daß die Führungsplatte (16) mit wenigstens zwei Positionierlöchern (22) ausgestattet ist, anhand derer das Anschlußteil (3) auf Positionierzapfen (37) eines Verdrahtungstisches (36) positioniert wird, wobei die Stützplatte (15) mit entsprechenden Löchern (23) ausgeführt ist, die größer sind als die Positionierlöcher der Führungsplatte.

## Revendications

1. Ensemble connecteur pour interconnecter des contacts optiques et ou électriques (11), comportant une première partie et une deuxième partie du connecteur (1, 2), la première et la seconde partie du connecteur étant munies respectivement d'une première pièce d'alignement et d'une seconde pièce d'alignement (3, 10), chaque pièce d'alignement ayant un ou plusieurs canaux d'alignement (4) pour respectivement des premiers et seconds contacts (11), lesdits canaux d'alignement s'étendant en biais vers le haut vers la surface supérieure de la pièce d'alignement, tel que chaque contact comporte une facette de fibre (40) à la surface supérieure de la pièce d'alignement correspondante, et tel que la première pièce d'alignement (3) est munie d'une rainure de référence (18) avec au moins une première face de référence rectiligne (19, 20) et la deuxième pièce d'alignement (10) est munie d'une excroissance de référence (28) avec au moins une deuxième face de référence rectiligne (29, 30) qui s'appuie contre la première face de référence dans une position accouplée des parties du connecteur, lesdites faces de référence étant situées à un emplacement déterminé avec précision en rapport avec les canaux d'alignement, caractérisé en ce qu'une ou les deux pièces d'alignement (3, 10) comportent une plaque de support (15, 25) et une plaque de guidage (16, 26), lesdits canaux d'alignement étant réalisés dans la plaque de support et dans la plaque de guidage, en ce qu'au moins les extrémités (17, 27) des canaux d'alignement (4) sont formées dans la plaque de guidage, et la rainure de référence (18) et l'excroissance de référence (28) faisant, respectivement, partie de la plaque de guidage, la plaque de guidage avec les extrémités des canaux d'alignement et la rainure de référence et l'excroissance de référence, respectivement, étant réalisée avec une plus grande précision que la plaque de support, en ce que la plaque de guidage est montée sur la face supérieure de la pièce d'alignement pour déterminer avec la précision de la plaque de guidage l'emplacement des facettes de fibres des contacts correspondants en rapport avec la rainure de référence ou l'excroissance de référence, respectivement.

2. Ensemble connecteur selon la revendication 1 caractérisé en ce que chaque canal d'alignement (4) débouche dans un creux en forme de V (17, 27) à la surface supérieure de la plaque de guidage (16, 26).

3. Ensemble connecteur selon l'une des revendications 1 à 2 caractérisé en ce que l'excroissance de référence (28) est réalisée avec une grande précision et en ce qu'elle est retenue dans une ouverture de la plaque de guidage (26).

4. Ensemble connecteur selon l'une des revendications 1 à 3 caractérisé en ce que la plaque de guidage (16, 26) est munie d'au moins une excroissance de polissage (32, 45) pour déterminer la profondeur de polissage.

5. Ensemble connecteur selon la revendication 4 caractérisé en ce que chaque excroissance de polissage (32, 45) est réalisée avec une grande précision et est retenue dans une ouverture (31) de la plaque de guidage (16, 26).

6. Ensemble connecteur selon l'une des revendications 1 à 5 caractérisé en ce que la plaque de guidage (16) est munie d'au moins deux orifices de positionnement (22) pour placer la pièce d'alignement complémentaire (3) sur des broches de positionnement (37) d'une table de montage (36), tel que la plaque de support (15) est munie de trous de positionnement complémentaires qui sont plus larges que les orifices de positionnement de la plaque de guidage.

7. Pièce d'alignement (3, 18) comportant un ou plusieurs canal d'alignement (4) pour des contacts optiques et ou électriques (11) et une rainure de référence (18) ou une excroissance de référence (28), respectivement, avec au moins une face de référence rectiligne (19, 20; 29, 30) située à une position déterminée exactement en respect avec les canaux d'alignement, caractérisée en ce que la pièce d'alignement (3, 10) comporte une plaque de support (15, 25) et une plaque de guidage (16, 26), lesdits canaux d'alignement étant réalisés dans la plaque de support et dans la plaque de guidage, tels qu'au moins les extrémités (17, 27) des canaux d'alignement (4) sont formées dans la plaque de guidage, la rainure de référence (18) et l'excroissance de référence (28) faisant, respectivement, partie de la plaque de guidage, la plaque de guidage avec les extrémités des canaux d'alignement et la rainure de référence ou l'excroissance de référence, respectivement, étant réalisées avec une plus grande précision que la plaque de support, telle que la plaque de guidage est montée sur une surface supérieure de la pièce d'alignement pour déterminer avec la précision de la plaque de guidage l'emplacement des facettes de fibres des contacts à monter dans les canaux en rapport avec la rainure de référence ou l'excroissance de référence, respectivement.

8. Procédé de réalisation d'une partie de connecteur (1, 2), dans lequel une pièce d'alignement (3, 10) est réalisée avec un ou plusieurs canaux d'alignement (4) pour des contacts optiques et ou électriques (11), et les contacts sont placés dans les canaux d'alignement (4) de telle sorte que les extrémités des contacts dépassent au moins partiellement au-dessus de la surface supérieure de la pièce d'alignement, à la suite de quoi les contacts sont bloqués dans la pièce d'alignement et des facettes de fibres des contacts sont formées dans un rabot avec la surface supérieure de la pièce d'alignement en enlevant par polissage les extrémités dépassant des contacts, caractérisé en ce que les pièces d'alignement (3, 10) sont obtenues en montant une plaque de guidage (16, 26) sur une plaque de support (15, 25), et en ce que les canaux d'alignement (4) sont réalisés dans la plaque de support et dans la plaque de guidage, tels qu'au moins les extrémités (17, 27) des canaux d'alignement (4) sont formées dans une plaque de guidage, et la rainure de référence (18) et l'excroissance de référence (28) étant, respectivement, réalisées comme des parties de la plaque de guidage, la plaque de guidage avec les extrémités des canaux d'alignement et la rainure de référence et l'excroissance de référence, respectivement, étant réalisée avec une plus grande précision que la plaque de support, tel que les contacts sont insérés dans les canaux d'alignement avec leurs extrémités retenues dans la plaque de guidage pour déterminer avec la précision de la plaque de guidage l'emplacement des facettes de fibres des contacts complémentaires en respect de la rainure de référence ou de l'excroissance de référence respectivement.

9. Procédé selon la revendication 8 caractérisé en ce que la plaque de guidage (16, 26) est munie d'au moins une excroissance de polissage (32, 45) avec une section en coupe dont la surface varie avec la hauteur, telle que l'étape de polissage est continue jusqu'à ce que la surface de chaque excroissance de polissage atteigne une valeur prédéterminée.

10. Procédé selon la revendication 9 caractérisé en ce que chaque excroissance de polissage (32) est réalisée avec une encoche en forme de V (33), dont l'apex du V est allongé dans le centre de l'excroissance de polissage, tel que l'apex de l'encoche en V est choisi de telle sorte que selon une section en coupe de la surface supérieure de la plaque de guidage, la surface de l'encoche en forme de V et les surfaces des parties de l'excroissance de polissage des deux côtés de l'encoche en forme de V sont mutuellement égales, tel que l'étape de polissage continue jusqu'à ce qu'une telle section soit obtenue.

11. Procédé selon la revendication 10 caractérisé en ce que pendant ladite étape de polissage la surface de l'encoche en forme de V (33) et les surfaces des parties de l'excroissance de polissage des deux côtés de l'encoche en forme de V sont mesurées en continue et l'étape de polissage est arrêtée dès que ces surfaces sont mutuellement égales à chaque excroissance de polissage.

12. Procédé selon l'une des revendications 9 à 11 caractérisé en ce que les excroissances de polissage (32, 45) sont réalisées avec une grande précision et sont retenues dans une ouverture (31) de la plaque de guidage (16, 26).

13. Procédé selon l'une des revendications 8 à 12 caractérisé en ce que la rainure de référence (19) avec au moins une face de référence rectiligne (19, 20) est formée dans la plaque de guidage à un emplacement déterminé avec précision en rapport avec les canaux d'alignement (4) tel qu'une encoche complémentaire (21) est formée dans la partie de support (15), laquelle encoche complémentaire étant plus large que la rainure de référence de la plaque de guidage.

14. Procédé selon l'une des revendications 8 à 12 caractérisé en ce que la plaque de guidage (26) est réalisée avec une excroissance de référence (28) avec au moins une face de référence rectiligne (29, 30) située à un emplacement déterminé avec précision en rapport avec les canaux d'alignement (4).

15. Procédé selon la revendication 14 caractérisé en ce que l'excroissance de référence (28) est réalisée avec une grande précision et est retenue dans une ouverture de la plaque de guidage complémentaire.

16. Procédé selon l'une des revendications 8 à 15 caractérisé en ce que la plaque de guidage (16) est munie d'au moins deux orifices de positionnement (22), au moyen desquels la pièce d'alignement (3) est placée sur des broches de positionnement (37) d'une table de montage (36), tels que la plaque de support (15) est réalisée avec des trous complémentaires (23) qui sont plus larges que les orifices de positionnement de la plaque de guidage.
